# EUROPÄISCHE PATENTANMELDUNG

(11) **EP 4 559 605 A1**
(43) Veröffentlichungstag der Anmeldung: **28.05.2025**
(21) Anmeldenummer: 24209237.7
(22) Anmeldetag: 28.10.2024
(51) Int. Cl.: B23C 5/10

(54) **SCHAFTFRÄSER**

(30) Priorität: 24.11.2023 DE 102023132906
(71) Anmelder: Haimer GmbH, 86568 Hollenbach-Igenhausen (DE)
(72) Erfinder: Sanhieter, Reihold, 86568 Hollenbach-Igenhausen (DE)

(57) **Zusammenfassung**

Der Schaftfräser, vorzugsweise aus Vollhartmetall, sieht einen Befestigungsabschnitt und einen Schneidbereich vor. Der Schneidbereich wird durch einen Kern und um den Kern angeordnete mindestens zwei helixförmig um eine Rotationsachse des Schaftfräsers verlaufende Schneiden gebildet, von denen jede jeweils eine umfangsseitige Hauptschneide und eine Nebenschneide an einer Stirnseite des Schneidbereichs aufweist.

An der Stirnseite des Schneidbereichs sind zumindest eine erste Ausspitzung des Kerns zwischen (ersten) zwei aneinander angrenzenden Schneiden und zumindest eine zweite Ausspitzung zwischen zwei (anderen bzw. zweiten) aneinander angrenzenden Schneiden vorgesehen.

Der Schaftfräser zeichnet sich weiter dadurch aus, dass die erste Ausspitzung - geometrisch - anders als die zweite Ausspitzung ausgebildet ist. Weiter soll die erste Ausspitzung einen (Ausspitzungs-)Winkel von 30° bis 45° und die zweite Ausspitzung einen (Ausspitzungs-)Winkel von 35° bis 50° aufweisen (- immer bezüglich einer (z.B. stirnseitigen) Normalebene zur Rotationsachse des Schaftfräsers). Darüber hinaus soll die erste Ausspitzung einen (Ausspitzungs-)Öffnungswinkel von 30° bis 50° und die zweite Ausspitzung einen (Ausspitzungs-)Öffnungswinkel von 40° bis 60° aufweisen (- der Öffnungswinkel immer als Winkel zwischen den Flanken der Ausspitzung in Draufsicht auf die Stirnseite des Schaftfräsers).

## Beschreibung

Die Erfindung betrifft einen Schaftfräser zur spanabhebenden Bearbeitung von metallischen Werkstoffen, insbesondere Stahl und Titan, nach dem Oberbegriff des Anspruchs 1.

Aus der DE 10 2015 116 623 A1 ist ein Schaftfräser bekannt, welcher einen Befestigungsabschnitt und einen Schneidbereich aufweist. Der Schneidbereich wird durch einen rotationssymmetrischen Kern und - in diesem Fall - vier Schneiden gebildet, welche helixförmig um den Kern herum angeordnet und einstückig mit dem Kern verbunden sind.

Die vier Schneiden weisen jeweils eine umfangsseitige Hauptschneide und eine Nebenschneide an einer freien Stirnseite des Schneidbereichs auf. Hierdurch wird erreicht, dass bei einem Planfräsen mit den Nebenschneiden eine gute Oberflächenqualität erzielt wird.

Bei derartigen Schaftfräsern besteht jedoch der Nachteil, dass sie für Bohrbearbeitungen, also eine spanabhebende Bearbeitung mit den stirnseitigen Nebenschneiden bei einer Vorschubrichtung im Wesentlichen entlang der Rotationsachse des Schaftfräsers, nicht geeignet sind, da sich im zentrumsnahen Bereich keine Schneiden befinden.

Selbst mit Werkzeugen, bei denen sich zumindest ein Teil der Schneiden im Wesentlichen bis zur Rotationsachse des Schaftfräsers erstreckt, ist eine Bohrbearbeitung schwierig, da die notwendige Spanabfuhr nicht zuverlässig gewährleistet werden kann.

Um weiter auch eine Bohrbearbeitung bzw. spanabhebende Bearbeitung an der gesamten Stirnseite zu ermöglichen, sieht der Schaftfräser aus der DE 10 2015 116 623 A1 an seiner Stirnseite eine Ausspitzung des Kerns zwischen jeweils aneinander angrenzenden Schneiden vor.

Die DE 10 2015 116 623 A1 bemisst bei ihrem Schaftfräser die Ausspitzungen als zwischen 30° und 40° (zwischen der zweiten Schneide und der dritten Schneide sowie zwischen der vierten Schneide und der ersten Schneide) bzw. 20° und 40° (zwischen der ersten Schneide und der zweiten Schneide sowie zwischen der dritten Schneide und der vierten Schneide).

Dabei gibt bzw. bemisst die DE 10 2015 116 623 A1 ihre Ausspitzungswinkel, wie genannt, gegenüber der Rotationsachse des Schaftfräsers.

Bemessen bzw. gemessen bezüglich einer z.B. stirnseitigen Normalebene zur Rotationsachse des Schaftfräsers sieht der Schaftfräser aus der DE 10 2015 116 623 A1 Ausspitzungen zwischen 50° und 60° (zwischen der zweiten Schneide und der dritten Schneide sowie zwischen der vierten Schneide und der ersten Schneide) bzw. 50° und 70° (zwischen der ersten Schneide und der zweiten Schneide sowie zwischen der dritten Schneide und der vierten Schneide) vor. D.h., der hier bemaßte Ausspitzungswinkel ist derjenige Winkel, welcher eingeschlossen wird zwischen (1) einer Verbindung/Gerade eines tiefsten, d.h. axial am Weitesten von der Stirnseite entfernten, Punktes der Ausspitzung verbunden mit dem Durchstoßpunkt der Rotationsachse des Schaftfräsers durch die stirnseitige Normalebene des Schaftfräsers und (2) der stirnseitigen Normalebene.

Der Schaftfräser aus der DE 10 2015 116 623 A1 sieht so sehr steil verlaufende Ausspitzungen vor, was zwar die Bohrbearbeitung verbessert, allerding auf Kosten der Zahndicke, - stabilität und damit der Steifigkeit des Schaftfräsers und der Qualität beim Planfräsen geht.

Es ist Aufgabe der Erfindung, die im Stand der Technik bekannten Schaftfräser zu verbessern, insbesondere dahingehend weiter zu verbessern, dass sie sowohl gute Qualität beim Planfräsen als auch bei Bohrbearbeitungen ermöglichen.

Diese Aufgabe wird gelöst durch einen Schaftfräser mit den Merkmalen des unabhängigen Anspruchs.

Vorteilhafte Weiterbildungen der Erfindung sind Gegenstand abhängiger Ansprüche sowie der nachfolgenden Beschreibung.

Gegebenenfalls verwendete Begriffe, wie oben, unten, vorne, hinten, links oder rechts sind - soweit nicht anders explizit definiert - nach üblichem Verständnis - auch in Ansehung der vorliegenden Figuren - zu verstehen. Begriffe, wie radial und axial, sind, soweit verwendet und nicht anders explizit definiert, in Bezug auf Mittel- bzw. Symmetrieachsen hier beschriebener Bauteile/Komponenten - auch in Ansehung der vorliegenden Figuren - zu verstehen.

Der Begriff "im Wesentlichen" - soweit verwendet - kann (nach höchstrichterlichem Verständnis) dahingehend verstanden werden, dass mit ihm von "einem praktisch noch erheblichen Maße" die Rede ist. Durch diese Begrifflichkeit so implizierte, mögliche Abweichungen vom Exakten, können sich so ohne Absicht (also ohne funktionale Begründung) aufgrund von Fertigungs- oder Montagetoleranzen o.ä. ergeben.

Der Schaftfräser, vorzugsweise aus Vollhartmetall, sieht einen Befestigungsabschnitt und einen Schneidbereich vor. Der Schneidbereich wird durch einen Kern und um den Kern angeordnete mindestens zwei, insbesondere vier (oder weiter mehr geradzahlige (beispielsweise sechs oder acht)) helixförmig um eine Rotationsachse des Schaftfräsers verlaufende Schneiden gebildet, von denen jede jeweils eine umfangsseitige Hauptschneide und eine Nebenschneide an einer Stirnseite des Schneidbereichs, d.h. stirnseitige Nebenschneide, aufweist.

An der Stirnseite des Schneidbereichs sind zumindest eine erste Ausspitzung des Kerns zwischen (ersten) zwei aneinander angrenzenden Schneiden und zumindest eine zweite Ausspitzung zwischen zwei (anderen bzw. zweiten) aneinander angrenzenden Schneiden vorgesehen.

Der Schaftfräser zeichnet sich weiter dadurch aus, dass die erste Ausspitzung - geometrisch - anders als die zweite Ausspitzung bzw. - geometrisch - unterschiedlich zu der zweiten Ausspitzung ist. Anders bzw. vereinfacht ausgedrückt, der Schaftfräser realisiert zumindest zwei - geometrisch - unterschiedliche Ausspitzungen.

Weiter soll die erste Ausspitzung einen (Ausspitzungs-)Winkel von 30° bis 45°, insbesondere von 32° bis 38°, im Speziellen ca. 35°, und die zweite Ausspitzung einen (Ausspitzungs-)Winkel von 35° bis 50°, insbesondere von 39° bis 46°, im Speziellen ca. 42,5°, aufweisen (- immer bezüglich einer (z.B. stirnseitigen) Normalebene zur Rotationsachse des Schaftfräsers).

Dabei sei hier bei dem Schaftfräser der Ausspitzungswinkel gemessen bzw. angegeben bezüglich einer z.B. stirnseitigen Normalebene zur Rotationsachse des Schaftfräsers. D.h., der hier bemaßte Ausspitzungswinkel ist derjenige Winkel, welcher eingeschlossen wird zwischen (1) einer Verbindung/Gerade eines tiefsten, d.h. axial am Weitesten von der Stirnseite entfernten, Punktes der Ausspitzung verbunden mit dem Durchstoßpunkt der Rotationsachse des Schaftfräsers durch die stirnseitige Normalebene des Schaftfräsers und (2) der stirnseitigen Normalebene.

Darüber hinaus soll die erste Ausspitzung einen Öffnungswinkel von 30° bis 50°, insbesondere von 35° bis 45°, im Speziellen von ca. 40°, und die zweite Ausspitzung einen Öffnungswinkel von 40° bis 60°, insbesondere von 41° bis 50°, im Speziellen von ca. 42,5°, aufweisen (- der Öffnungswinkel immer als Winkel zwischen den Flanken der Ausspitzung in Draufsicht auf die Stirnseite des Schaftfräsers).

Der Ausspitzungsöffnungswinkel sei hier als Winkel zwischen den Flanken der Ausspitzung in Draufsicht auf die Stirnseite des Schaftfräsers gemessen. Anders ausgedrückt, die Flanken der Ausspitzung laufen - in Draufsicht auf die Stirnseite des Schaftfräsers - zueinander in einem in der Perspektive erscheinenden Winkel, nämlich hier dem Ausspitzungsöffnungswinkel, zu. (Gegebenenfalls kann die Winkelspitze auch gerundet sein.)

Unter Ausspitzung kann dabei jede Ausgestaltung umfasst sein, mit welcher das Material des Kerns und eventuell auch der Schneiden im Bereich der Stirnseite des Schneidbereichs in Umfangsrichtung begrenzt lokal zwischen den Schneiden reduziert wird.

Als Kern ist der rotationssymmetrische Kernbereich eines Schaftfräsers im Schneidbereich zu verstehen. Die Schneiden sind um diesen Kern herum angeordnet und mit dem Kern einstückig ausgebildet. Der Boden jeder Spanabführnut, welche in Umfangsrichtung zwischen den Schneiden ausgebildet sind, wird dabei durch den Kern begrenzt.

In einer vorteilhaften Ausführungsform kann die Ausspitzung als in Richtung von dem Befestigungsabschnitt zu der Stirnseite des Schneidbereichs sich der Rotationsachse des Schaftfräsers annähernde Aussparung im Bereich der Stirnseite des Schneidbereichs ausgebildet sein. Eine derartige Aussparung kann beispielsweise besonders einfach durch Schleifen erreicht werden.

Dem Schaftfräser liegt die Erkenntnis bzw. Überlegung zugrunde, dass mit steigendem Ausspitzungswinkel - und damit größer bzw. steiler werdender Ausspitzung die Fähigkeit des Schaftfräsers in Bezug auf Bohrbearbeitungen ansteigt bzw. sich verbessert. Allerdings verringert sich mit steigender Ausspitzung bzw. größer/steiler werdenden Ausspitzungswinkel die Zahndicke, was die Festigkeit und die Steifigkeit des Schaftfräsers und seine Qualität beim Planfräsen beeinträchtigt bzw. beeinträchtigen kann.

Ausgehend von dieser Erkenntnis versucht der erfindungsgemäße Schaftfräser nun einen Kompromiss bezüglich dieser konkurrierenden Anforderungen - von Spanabfuhr und Stabilität bzw. von bzw. bei der Bohrbearbeitung und beim Planfräsen - zu finden.

Hier hat sich überraschend gezeigt, dass, wenn ein - die Bohrbearbeitung fördernder, aber ggfl. das Planfräsen beeinträchtigender - größerer erster Ausspitzungswinkel realisiert wird, das ggfl. "Beeinträchtigende" durch einen, gleichzeitig auch realisierten, kleineren zweiten Ausspitzungswinkel - "kompensiert" werden kann, und so den konkurrierenden Forderungen genügt wird bzw. werden kann.

Allerdings sollen bzw. dürfen, was sich ebenfalls gezeigt hat, die beiden unterschiedlichen, "konkurrierenden" Ausspitzungen einerseits nicht in extremen Randbereichen (z.B. kleiner 20° bzw. größer 70°) liegen und andererseits selbst nicht zu weit voneinander auseinanderliegen bzw. abweichen, da sonst - bei solch beiderseitigen "Extremen" (absolut wie relativ) - die konkurrierenden Effekte nicht mehr ausgeglichen bzw. kompensiert werden können.

Entsprechendes gilt für die vom Schaftfräser vorgesehen (Ausspitzungs-)Öffnungswinkel. Auch hier schaffen zwar große (Ausspitzungs-)Öffnungswinkel genügend Platz zur Spanabfuhr und/oder wirken positiv auf die Bohrbearbeitung, nehmen aber - die Steifigkeit mindernd - Material an den Zähnen ab. Erster und zweiter (Ausspitzungs-)Öffnungswinkel schaffen auch hier, wie sich überraschend gezeigt hat, einen Kompromiss zwischen den konkurrierenden Effekten bzw. können sie kompensieren.

D.h., der erfindungsgemäße Schaftfräser schafft mit seiner "ausgewogenen Aufteilung" von Ausspitzungen - von einerseits einer ersten kleineren Ausspitzung und andererseits einer (wertemäßig) nicht weit entfernt von der ersten liegenden, zweiten größeren Ausspitzung - im mittleren Bereich von Ausspitzungen - die gegenläufigen Effekte "unter einen Hut zu bringen" (bzw. zu kompensieren) - und so einen guten Kompromiss zwischen guter Bohrbearbeitung und Planfräsen (bzw. ausreichender Steifigkeit) zu schaffen.

Darüber hinaus ist ein solcher erfindungsgemäßer Schaftfräser - wegen seiner "ausgewogenen Aufteilung von Ausspitzungen" - auch einfach und kostengünstig herzustellen.

Bevorzugt, gerade um die Ausgewogenheit und Kompensation zu realisieren, kann es vorgesehen sein, dass die erste Ausspitzung einen (Ausspitzungs-)Winkel von 32° bis 38°, insbesondere von ca. 35°, und die zweite Ausspitzung einen (Ausspit-zungs-)Winkel von 39° bis 46°, insbesondere von ca. 42,5°, aufweisen.

Entsprechendes gilt auch für bevorzugte Ausspitzungsöffnungswinkel, welche bevorzugt so realisiert sein können, dass die erste Ausspitzung einen Öffnungswinkel von 35° bis 45°, insbesondere von ca. 40°, und die zweite Ausspitzung einen Öffnungswinkel von 41° bis 50°, insbesondere von ca. 42,5°, aufweisen.

Insbesondere erscheint es auch von Vorteil, wenn mehrere von den ersten und den zweiten Ausspitzungen realisiert sind, wobei sich die ersten und die zweiten Ausspitzungen an der Stirnseite des Schaftfräsers in Umfangsrichtung wechselseitig abwechseln.

Zweckmäßig erscheint es auch, wenn die stirnseitige Nebenschneide einer ersten Schneide eines ersten Zahns länger als die stirnseitige Nebenschneide einer zweiten Schneide eines zweiten Zahns ist, wobei die erste Ausspitzung den Spanraum der ersten Schneide bzw. des ersten Zahns mitausbildet und die zweite Ausspitzung den Spanraum der zweiten Schneide bzw. des zweiten Zahns mitausbildet.

Ebenfalls können bevorzugt mehrere von den ersten Zähnen bzw. ersten Schneiden mit den längeren stirnseitigen Nebenschneiden und den Spanräumen mit den ersten Ausspitzungen sowie mehrere von den zweiten Zähnen bzw. zweiten Schneiden mit den kürzeren stirnseitigen Nebenschneiden und den Spanräumen mit den zweiten Ausspitzungen vorgesehen sein, wobei sich die längeren stirnseitigen Nebenschneiden mit ihren jeweiligen ersten Ausspitzungen und die kürzeren stirnseitigen Nebenschneiden mit ihren jeweiligen zweiten Ausspitzungen an der Stirnseite des Schaftfräsers in Umfangsrichtung des Schneidabschnitts wechselseitig abwechseln.

Zweckmäßig erweist sich auch, wenn die erste und die zweite Ausspitzung - stirnseitig beginnend - im Wesentlichen auf derselben axialen Höhe im Schneidbereich enden.

Nach einer - bevorzugten - Ausgestaltung kann vorgesehen sein, dass der Schneidbereich insgesamt vier Schneiden umfasst, von denen eine erste Schneide und eine dritte Schneide sowie eine zweite Schneide und eine vierte Schneide einander - im Wesentlichen - gegenüberliegen bzw. - in etwa diametral gegenüberliegend - und die erste Ausspitzung zwischen der ersten Schneide und der zweiten Schneide sowie zwischen der dritten Schneide und der vierten Schneide und die zweite Ausspitzung zwischen der zweiten Schneide und der dritten Schneide sowie zwischen der vierten Schneide und der ersten Schneide vorgesehen sind.

Ferner erweist sich auch als von Vorteil, wenn die Schneiden in Umfangsrichtung des Schneidbereichs ungleichmäßig verteilt sind. Eine solche Ungleichverteilung kann beispielsweise bezüglich einer vorgebbaren axialen Höhe festgelegt sein, insbesondere für die Stirnfläche des Schaftfräsers (entspricht Höhe 0 mm) oder einer Höhe ca. 0,5 * D (D = Durchmesser des Schneidbereichs) axial unterhalb der Stirnfläche des Schaftfräsers.

Dabei kann hier, d.h. bei benannter Ungleichverteilung, insbesondere auch vorgesehen sein, dass in Umfangsrichtung des Schneidbereichs und an einer vorgebbaren axialen Höhe in dem Schneidbereich der Winkel zwischen der ersten Schneide und der zweiten Schneide und zwischen der dritten Schneide und der vierten Schneide jeweils größer als 90°, insbesondere ca. 97,5 °, ist und/oder der Winkel zwischen der zweiten Schneide und der dritten Schneide und zwischen der vierten Schneide und der ersten Schneide jeweils kleiner als 90°, insbesondere ca. 82,5°, ist, insbesondere, dass die vorgebbare axiale Höhe die Stirnfläche des Schaftfräsers (entspricht Höhe 0 mm) oder ca. 0,5 * D (D = Durchmesser des Schneidbereichs) axial unterhalb der Stirnfläche des Schaftfräsers ist.

Auch kann vorgesehen sein, dass die umfangsseitigen Hauptschneiden der Schneiden unterschiedliche Drallwinkel aufweisen, insbesondere, dass die umfangsseitigen Hauptschneiden der Schneiden in Umfangsrichtung des Schneidbereichs wechselnd einen ersten und einen zu dem ersten Drallwinkel unterschiedlichen zweiten Drallwinkel aufweisen.

Auch mag es zweckmäßig sein, besondere Geometrien bei den Schneiden zu realisieren.

So kann vorgesehen sein, dass die Stirnfläche einer, insbesondere jeder, Schneide an der Nebenschneide einen Freiwinkel zwischen 5° und 7°, insbesondere ca. 6°, zu einer zu der Rotationsachse des Schaftfräsers senkrechten Ebene aufweist.

Auch kann vorgesehen sein, dass die spanraumseitige (Stirn-)Fläche einer, insbesondere jeder, Nebenschneide einen Spanwinkel zwischen 2° und 4°, insbesondere ca. 3°, zu einer zu der Rotationsachse des Schaftfräsers parallelen Ebene aufweist.

Ferner kann vorgesehen sein, dass die stirnseitige Nebenschneide und die umfangsseitige Hauptschneide einer Schneide über eine Eckfase ineinander übergehen, mit insbesondere einen Eckfasenwinkel von ca. 45°.

Es erweist sich auch als zweckmäßig, wenn der Kern des Schaftfräsers zylindrisch ausgebildet ist.

Weiterhin kann bei einer bevorzugten Ausgestaltung vorgesehen sein, dass zumindest der Schneidbereich beschichtet ist, mit insbesondere einer Beschichtung mit einer Schichtdicke zwischen 0,0010 mm und 0,006 mm, im Besonderen zwischen 0,0015 mm und 0,005 mm, im Speziellen zwischen 0,0018 mm und 0,004 mm.

Auch erweist es sich als vorteilhaft, wenn der Schaftfräser aus Vollhartmetall ist.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammengefasst werden.

Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein. Ferner sind die Wörter "ein" bzw. "eine" nicht als Zahlwörter, sondern als unbestimmte Artikel zu verstehen.

Die oben beschriebenen Eigenschaften, Merkmale und Vorteile der Erfindung sowie die Art und Weise, wie diese erreicht werden, werden klarer und deutlicher verständlich im Zusammenhang mit der folgenden Beschreibung der Ausführungsbeispiele der Erfindung, die im Zusammenhang mit der bzw. den Zeichnungen/Figuren näher erläutert werden (gleiche Bauteile/Komponenten und Funktionen weisen in den Zeichnungen/Figuren gleiche Bezugszeichen auf).

Die Ausführungsbeispiele dienen der Erläuterung der Erfindung und beschränken die Erfindung nicht auf darin angegebene Kombinationen von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und mit einem beliebigen der Ansprüche kombiniert werden.

Es zeigen:
- FIG 1: eine Seitenansicht auf einen Vollhartmetall-Schaftfräser mit einem Schneidbereich und einem Befestigungsabschnitt gemäß einer erfindungsgemäßen Ausführung;
- FIG 2: eine Vorderansicht auf die freie Stirnseite des Vollhartmetall-Schaftfräsers aus Fig. 1;
- FIG 3: eine Aufnahme auf die freie Stirnseite des Vollhartmetall-Schaftfräsers aus Fig. 1;
- FIG 4-1: (Ausspitzung langer Zahn) und FIG 4-2 (Ausspitzung kurzer Zahn)
jeweils eine Aufnahme auf eine Seitenansicht des Vollhartmetall-Schaftfräsers mit der Ausspitzung bei einem langen zahn bzw. einem kurzen Zahn aus Fig. 1.

### - (Vollhartmetall-)Schaftfräser (FIGen 1 und 4)

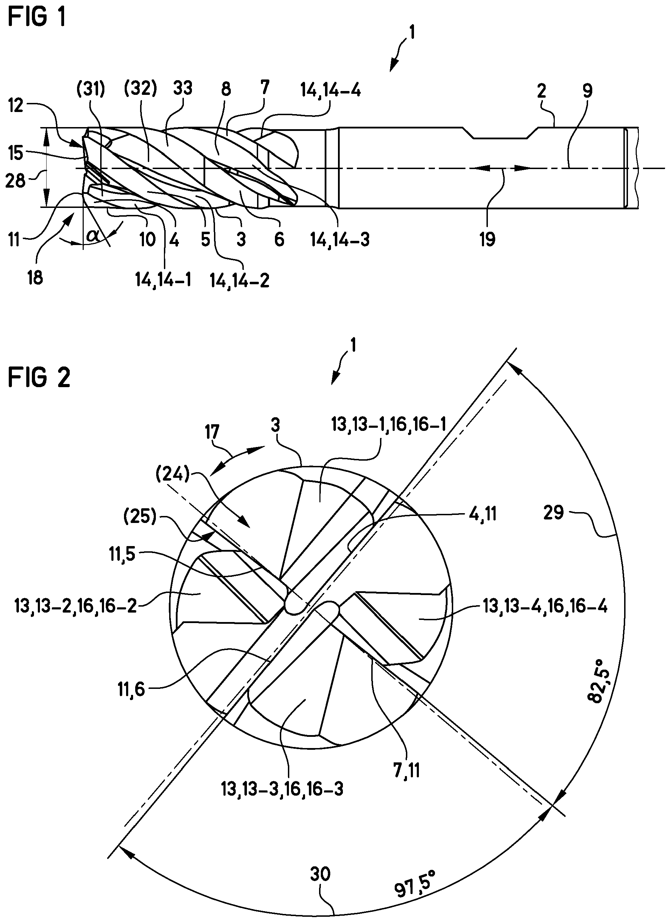

FIGen 1 und 2 zeigen (schematisch) - in verschiedenen Ansichten und Details - einen Schaftfräser 1 (aus Vollhartmetall). Fig. 1 zeigt dabei den Vollhartmetall-Schaftfräser 1 in einer Seitenansicht; Fig. 2 zeigt den Vollhartmetall-Schaftfräser 1 in Vorderansicht auf seine (freie) Stirnseite 12. Fig.en 3 bis 4 zeigen jeweils Aufnahmen - aus verschiedenen Perspektiven (Stirnseite, Seite) - auf den Vollhartmetall-Schaftfräser 1.

Der Vollhartmetall-Schaftfräser 1 weist einen Befestigungsabschnitt 2 und einen Schneidbereich 3 mit - in diesem Fall - vier Zähnen 4, 5, 6 und 7 bzw. vier Schneiden 4, 5, 6 und 7 auf.

Der Befestigungsabschnitt 2 weist eine zylindrische Form auf und ist zur Aufnahme in einem Spannfutter einer Werkstückbearbeitungsmaschine, wie beispielsweise eines CNC-Fräsbearbeitungszentrums (nicht gezeigt), ausgebildet.

An den Befestigungsabschnitt 2 schließt sich der Schneidbereich 3 an, welcher durch einen - in diesem Fall zylindrisch ausgebildeten - Kern 8 - und die um den Kern 8 angeordneten Schneiden 4, 5, 6 und 7 bzw. Zähne 4, 5, 6 und 7 gebildet wird.

Die Schneiden/Zähne 4, 5, 6 und 7 verlaufen dabei helixförmig um eine Rotationsachse 9 des Vollhartmetall-Schaftfräsers 1 und sind einstückig mit dem (zylindrischen) Kern 8 ausgebildet.

Jede Schneide 4, 5, 6 und 7 weist jeweils eine umfangsseitige Hauptschneide 10 und eine (stirnseitige) Nebenschneide 11 an einer Stirnseite 12 des Schneidbereichs 3 auf, welche dazu ausgebildet sind, bei einer Rotation des Vollhartmetall-Schaftfräsers 1 um die Rotationsachse 9 spanabhebend mit dem zu bearbeitenden Werkstück (nicht gezeigt) zusammenzuwirken.

Zur besseren Übersicht sind die Bezugszeichen für die Hauptschneide 10 und die Nebenschneide 11 bei der Darstellung in den Figuren nicht vollumfänglich für alle Schneiden 4, 5, 6 und 7 eingetragen, jede Schneide 4, 5, 6 und 7 verfügt jedoch über sowohl eine (umfangsseitige) Hauptschneide 10 als auch eine (stirnseitige) Nebenschneide 11.

Dabei sind, wie Fig. 2 auch zeigt, die stirnseitigen Nebenscheiden 11 der Schneiden 4 und 6 länger als die stirnseitigen Nebenschneiden 11 der Schneiden 5 und 7. Deshalb sei im Folgenden auch bei den - "langen" - Schneiden 4 und 6 von "langen Zähnen" 4 und 6 - und bei den - "kurzen" - Schneiden 5 und 7 von den "kurzen Zähnen" 5 und 7 gesprochen.

Die stirnseitigen Nebenschneiden 11 und die umfangsseitigen Hauptschneiden 10 aller Schneiden 4, 5, 6 und 7 gehen jeweils über eine Eckfase 18 ineinander über, mit insbesondere einen Eckfasenwinkel α von ca. 45°.

Im Bereich der Stirnseite 12 des Schneidbereichs 3 sind zudem - in diesem Fall entsprechend der Anzahl der vier Schneiden 4, 5, 6 und 7 - vier Ausspitzungen 13-1, 13-2, 13-3 und 13-4 des Kerns 8 vorgesehen, deren jede den Spanabführraum 16-1, 16-2, 16-3 bzw. 16-4 der jeweiligen Schneide 4, 5, 6 bzw. 7 mitausbildet (Ausspitzung 13-1 für Schneide 4, Ausspitzung 13-2 für Schneide 5, Ausspitzung 13-3 für Schneide 6 und Ausspitzung 13-4 für Schneide 7).

Durch diese Ausspitzungen 13-1, 13-2, 13-3 und 13-4 wird der Kern 8 in Umfangsrichtung 17 des Vollhartmetall-Schaftfräsers 1 - lokal begrenzt - zwischen den Schneiden 4, 5, 6 und 7 im Querschnitt reduziert.

Die Ausspitzungen 13-1, 13-2, 13-3 und 13-4 sind jeweils als - beispielsweise mittels Schleifen - erzeugte und in Richtung von dem Befestigungsabschnitt 2 zu der Stirnseite 12 des Schneidbereichs 3, sich der Rotationsachse 9 des Vollhartmetall-Schaftfräsers 1 annähernde Aussparungen im Bereich der Stirnseite 12 des Schneidbereichs 3 in den Spanabführnuten 14-1, 14, 2, 14-3 und 14-4 zwischen jeweils der Schneiden 4, 5, 6 und 7 ausgebildet (Ausspitzung 13-1 zu Spanabführnut 14-1, Ausspitzung 13-2 zu Spanabführnut 14-2, Ausspitzung 13-3 zu Spanabführnut 14-3 und Ausspitzung 13-4 zu Spanabführnut 14-4) .

Hierbei sind die Ausspitzungen 13-1, 13-2, 13-3, 13-4 derart gewählt, dass die erste und die dritte Ausspitzung 13-1 und 13-3 (geometrisch) gleich zueinander und (geometrisch) anders sind als die zweite und die vierte Ausspitzung 13-2 und 13-4 (diese auch wieder (geometrisch) gleich zueinander).

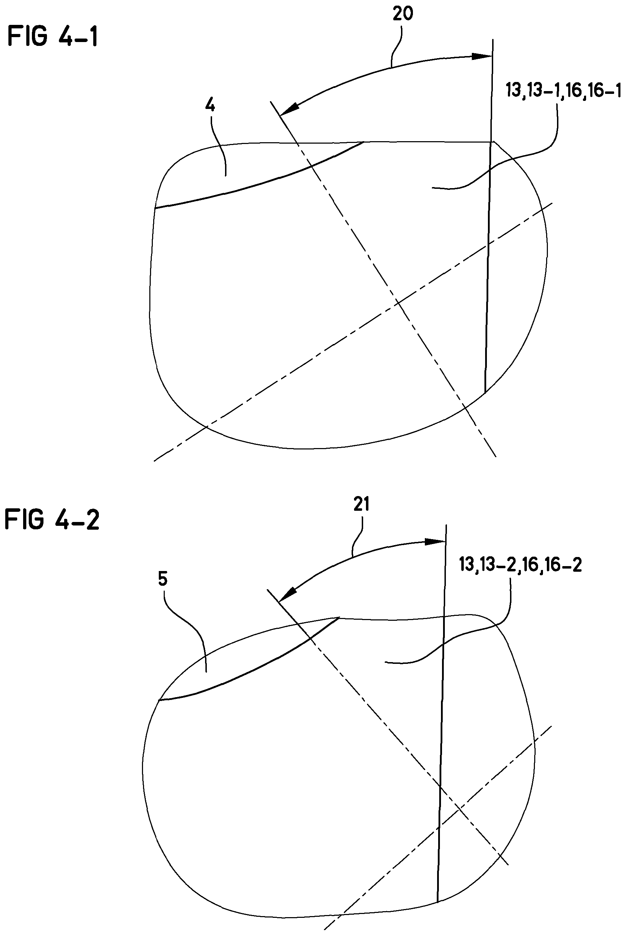

Weiter soll so die erste bzw. die dritte Ausspitzung 13-1 bzw. 13-3 einen (Ausspitzungs-)Winkel 20 aus dem Bereich von 30° bis 45°, hier ca. 35°, (vgl. Fig. 4-1) und die zweite bzw. vierte Ausspitzung 13-2 bzw. 13-4 einen (Ausspitzungs-)Winkel 21 aus dem Bereich von 35° bis 50°, hier ca. 42,5°, aufweisen (vgl. Fig. 4-2) (- immer bezüglich einer (z.B. stirnseitigen) Normalebene zur Rotationsachse des Schaftfräsers).

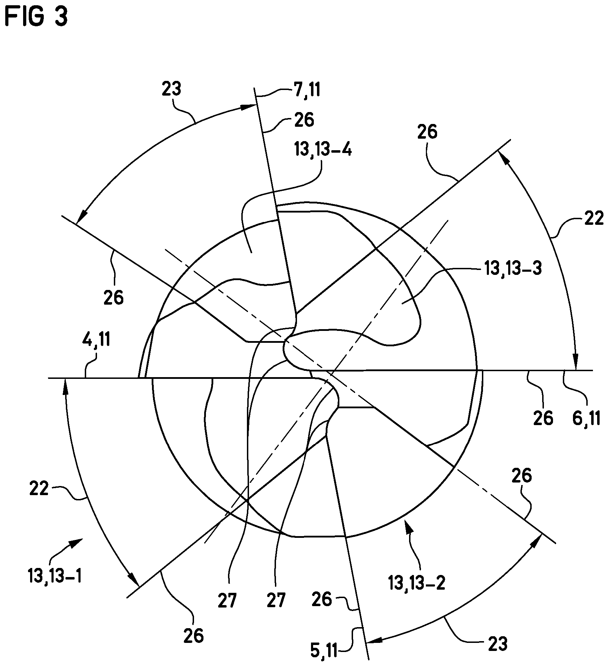

Darüber hinaus soll die erste bzw. die dritte Ausspitzung 13-1 bzw. 13-3 einen (Ausspitzungs-)Öffnungswinkel 22 aus dem Bereich von 30° bis 50°, hier ca. 40°, und die zweite bzw. vierte Ausspitzung 13-2 bzw. 13-4 einen (Ausspitzungs-)Öffnungswinkel 23 aus dem Bereich von 40° bis 60°, hier ca. 42,5°, aufweisen (- der Öffnungswinkel immer als Winkel zwischen den Flanken der Ausspitzung in Draufsicht auf die Stirnseite des Schaftfräsers) (vgl. Fig. 3).

Anschaulich gesehen, die Flanken 26 der Ausspitzungen 13-1/13-3 bzw. 13-2/13-4 verlaufen - in der in Fig. 3 gezeigten Draufsicht auf die Stirnseite 12 - aufeinander zu in einem in der Perspektive erscheinenden Winkel 22 bzw. 23 von 40° bzw. 42,5°, wobei jeweils die Spitze in Richtung der Rotationsachse 9 mit einem Radius verrundet ist (Verrundung 27), welcher - hier beispielsweise - dem 0,075- bis 0,125-fachen des Schneidbereichsdurchmessers 28 (für die Ausspitzungen 13-1 und 13-3) bzw. dem 0,1- bis 0,3-fachen des Schneidbereichsdurchmesser 28 (für die Ausspitzungen 13-2 und 13-4) entspricht.

D.h., - vereinfacht und anschaulich gesprochen -, die erste und die dritte Ausspitzung 13-1 bzw. 13-3, jeweils an den längeren stirnseitigen Nebenschneiden 11 gelegen, sind (geometrisch) gleich, wie auch die zweite und die vierte Ausspitzung 13-2 bzw. 13-4, jeweils an den kürzeren stirnseitigen Nebenschneiden 11 gelegen, (geometrisch) gleich sind, wobei die zweite und die vierte Ausspitzung 13-2 bzw. 13-4 "steiler und mit größerem (Ausspitzungs-)Öffnungswinkel verlaufend" als die erste und die dritte Ausspitzung 13-1 bzw. 3-3 sind. An der Stirnseite 12 des Schaftfräsers wechseln sich so die beiden unterschiedlichen Ausspitzungen 13-1 bzw. 13-3 und 13-2 bzw. 13-4 - in Umfangsrichtung 17 - wechselseitig ab.

Weiterhin sieht der Vollhartmetall-Schaftfräser 1 vor, dass alle Ausspitzungen 13-1, 13-2, 13-3 und 13-4 - stirnseitig (12) beginnend - im Wesentlichen auf derselben axialen (19) Höhe im Schneidbereich 3 enden, um so eine gleichmäßige Spanabfuhr in die jeweilige Spanabführnut 14-1, 14-2, 14-3 bzw. 14-4 zu gewährleisten.

Die Spanabführnuten 14-1, 14, 2, 14-3 und 14-4 sind dabei, wie insbesondere Fig. 1 verdeutlicht, zwischen jeweils zwei (in Umfangsrichtung 17) benachbarten Schneiden 4 und 5 bzw. 5 und 6 bzw. 6 und 7 bzw. 7 und 4 der Zähne 4, 5, 6 und 7 angeordnet - und dienen - zusammen mit den Ausspitzungen 13-1, 13-2, 13- und 13-4 - der Abführung der von den Hauptschneiden 10 und den Nebenschneiden 11 der Schneiden 4, 5, 6 und 7 erzeugten Späne.

D.h., jeweils beide zusammen, d.h. die Spanabführnuten 14 und die Ausspitzungen 13 bilden die Spanabführräume 16 bei den schneiden/Zähnen 4, 5, 6, und 7 aus.

Durch die Ausspitzungen 13-1, 13-2, 13-3 und 13-4 wird der Querschnitt der Spanabführnuten 14-1, 14, 2, 14-3 und 14-4 im Bereich der Stirnseite 12 des Schneidbereichs 3 vergrößert, wodurch Späne insbesondere aus dem zentrumsnahen Bereich der (stirnseitigen) Nebenschneiden 11 besonders gut abtransportiert werden können (vgl. einleitend zur Erfindung zur Bohrbearbeitung und Ausgewogenheit der Ausspitzungen).

Alle Schneiden/Zähne 4, 5, 6 und 7 weisen jeweils einen Freiwinkel 24 von 5° bis 7° und insbesondere 6° auf, das heißt der Winkel zwischen einer Stirnfläche 15 jeder Nebenschneide 11 und einer zur Rotationsachse 9 senkrechten (Normal-)Ebene beträgt 5° bis 7°, bzw. insbesondere 6°.

Ebenso sehen alle Schneiden/Zähne 4, 5, 6 und 7 jeweils einen (Stirn-)Spanwinkel 25 von 2° bis 4°, insbesondere hier von ca. 3°, auf, was heißt, die spanraumseitige (Stirn-)Fläche einer (d.h., hier jeder) Nebenschneide 11 sieht einen Spanwinkel 25 zwischen 2° und 4°, insbesondere ca. 3°, zu einer zu der Rotationsachse 9 des Schaftfräsers parallelen Ebene vor.

Wie auch Fig. 2 - dort anhand der hilfsweise eingezeichneten Linien verdeutlicht - zu entnehmen ist, sind die Schneiden 4, 5, 6 und 7, Nebenschneiden 11 zusammen mit den Hauptschneiden 10, in Umfangsrichtung 17 des Vollhartmetall-Schaftfräsers 1 ungleichmäßig verteilt angeordnet, was der Stabilität der Schneiden 4, 5, 6 und 7 förderlich ist und Vibrationen vermindert.

Dabei bezieht sich diese Ungleichteilung, wie angegeben, auf eine Normalebene (zur Rotationsachse 9), welche ca. 0,5 * D (D = Durchmesser des Schneidbereichs 3 des Vollhartmetall-Schaftfräsers 1 - axial 19 (in Richtung der Rotationsachse 9) unterhalb der Stirnseite 12 liegt.

So liegen die erste Schneide 4 und die dritte Schneide 6 sowie die zweite Schneide 5 und die vierte Schneide 7 - stirnseitig 12 - einander in etwa gegenüber bzw. in etwa diametral gegenüber, jedoch ist der Winkel zwischen der ersten Schneide 4 und der (im Uhrzeigersinn) anschließenden vierten Schneide 7 und zwischen der dritten Schneide 6 und der (im Uhrzeigersinn) anschließenden zweiten Schneide 5 jeweils kleiner als 90° (erster Teilungswinkel 29), besonders bevorzugt mit ca. 82,5°, ausgebildet. Das bedeutet, dass damit der Winkel zwischen der vierten Schneide 7 und der (im Uhrzeigersinn) anschließenden dritten Schneide 6 sowie zwischen der zweiten Schneide 5 und der (im Uhrzeigersinn) anschließenden ersten Schneide 4 größer als 90° und bevorzugt ca. 97,5° ist (zweiter Teilungswinkel 30).

Da dabei auch der Drallwinkel der Schneiden 4 und 6, hier ca. 36,5° (erster Drallwinkel 31), unterschiedlich zu dem der Schneiden 5 und 7, hier ca. 38° (zweiter Drallwinkel 32), ist, ergibt sich in nahezu allen axialen 19 Normalebenen bezüglich der Rotationsachse 9 des Vollhartmetall-Schaftfräsers 1 im Bereich der axialen Erstreckung 19 der Ausspitzungen 13-1, 13-2, 13-3 und 13-4 eine ungleiche Teilung der Schneiden 4, 5, 6 und 7 (, welche Ungleichteilung der Schneiden 4, 5, 6 und 7 im Schneidbereich 3 sich aber entlang der Rotationsachse 9 ändert.

Diese Ungleichteilung der Schneiden 4, 5, 6 und 7 ist - aufgrund ihrer vorteilhaften Stabilität - von besonderer Bedeutung im Bereich der Stirnseite 12 des Schneidbereichs 3, da hier die Reduzierung des Querschnitts des Kerns 8 des Vollhartmetall-Schaftfräsers 1 durch die Ausspitzungen 13-1, 13-2, 13-3 und 13-4 am stärksten ausgeprägt ist, um die zwei im Wesentlichen bis zur Rotationsachse 9 reichenden langen Nebenschneiden 11 zu bilden und zu begrenzen sowie eine Spanabfuhr von den Nebenschneiden 11 in axialer Richtung 19 nahe der Rotationsachse 9 zu ermöglichen.

Dies ist insbesondere bei Bohrbearbeitungen von besonderer Bedeutung, da bei einer Bohrung im Vollmaterial ohne Vorbohrung Material über den gesamten Querschnitt des Schneidbereichs 3 spanabhebend abgetragen werden muss.

Ferner ist bei dem Vollhartmetall-Schaftfräser 1 dann auch noch vorgesehen, dass zumindest der Schneidbereich 3 beschichtet ist, mit insbesondere einer Beschichtung 33 mit einer Schichtdicke zwischen 0,0010 mm und 0,006 mm, im Besonderen zwischen 0,0015 mm und 0,005 mm, im Speziellen zwischen 0,0018 mm und 0,004 mm.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können hieraus abgeleitet werden, ohne den Schutzumfang der Erfindung zu verlassen.

### Bezugszeichenliste:

1 Vollhartmetall-Schaftfräser
2 Befestigungsabschnitt
3 Schneidbereich
4 Erste Schneide/erster (langer) Zahn
5 Zweite Schneide/zweiter (kurzer) Zahn
6 Dritte Schneide/dritter (langer) Zahn
7 Vierte Schneide/vierter (kurzer) Zahn
8 (zylindrischer) Kern
9 Rotationsachse
10 (umfangsseitige) Hauptschneide
11 (stirnseitige) Nebenschneide
12 Stirnseite des Vollhartmetall-Schaftfräsers bzw. des Schneidbereichs
13 bzw. 13-1, 13-2, 13-3, 13-4 Ausspitzungen
14 bzw. 14-1, 14-2, 14-3, 14-4 Spanabführnuten
15 Stirnfläche
16 bzw. 16-1, 16-2, 16-3, 16-4 Spanabführräume
17 Umfangsrichtung
18 Eckfase
19 Axialrichtung, "axial"
20 (Ausspitzungs-)Winkel für die erste bzw. die dritte Ausspitzung 13-1 bzw. 13-3
21 (Ausspitzungs-)Winkel für die zweite bzw. die vierte Ausspitzung 13-2 bzw. 13-4
22 (Ausspitzungs-)Öffnungswinkel für die erste bzw. die dritte Ausspitzung 13-1 bzw. 13-3
23 (Ausspitzungs-)Öffnungswinkel für die zweite bzw. die vierte Ausspitzung 13-2 bzw. 13-4
24 Freiwinkel
25 (Stirn-)Spanwinkel
26 Flanke
27 Verrundung
28 Schneidbereichsdurchmesser
29 erster Teilungswinkel
30 zweiter Teilungswinkel
31 erster Drallwinkel
32 zweiter Drallwinkel
33 Beschichtung
α Eckphasenwinkel

## Patentansprüche

1. Schaftfräser mit einem Befestigungsabschnitt und einem Schneidbereich, wobei der Schneidbereich durch einen Kern und um den Kern angeordnete mindestens zwei helixförmig um eine Rotationsachse des Schaftfräsers verlaufende Schneiden gebildet wird, von denen jede jeweils eine umfangsseitige Hauptschneide und eine Nebenschneide an einer Stirnseite des Schneidbereichs aufweist, wobei an der Stirnseite des Schneidbereichs zumindest eine erste Ausspitzung des Kerns zwischen zwei aneinander angrenzenden Schneiden und zumindest eine zweite Ausspitzung zwischen zwei aneinander angrenzenden Schneiden vorgesehen ist,
**dadurch gekennzeichnet, dass**
die erste Ausspitzung anders als die zweite Ausspitzung ausgebildet ist, die erste Ausspitzung einen (Ausspitzungs-)Winkel von 30° bis 45° und die zweite Ausspitzung einen (Ausspitzungs-)Winkel von 35° bis 50° sowie die erste Ausspitzung einen Öffnungswinkel von 30° bis 50° und die zweite Ausspitzung einen Öffnungswinkel von 40° bis 60° aufweisen.

2. Schaftfräser nach einem der voranstehenden Ansprüche,
**dadurch gekennzeichnet, dass**
die erste Ausspitzung einen (Ausspitzungs-)Winkel von 32° bis 38°, insbesondere von ca. 35°, und die zweite Ausspitzung einen (Ausspitzungs-)Winkel von 39° bis 46°, insbesondere von ca. 42,5°, aufweisen.

3. Schaftfräser nach einem der voranstehenden Ansprüche,
**dadurch gekennzeichnet, dass**
die erste Ausspitzung einen Öffnungswinkel von 35° bis 45°, insbesondere von ca. 40°, und die zweite Ausspitzung einen Öffnungswinkel von 41° bis 50°, insbesondere von ca. 42,5°, aufweisen.

4. Schaftfräser nach einem der voranstehenden Ansprüche,
**gekennzeichnet, durch**
mehrere von den ersten und den zweiten Ausspitzungen, wobei sich die ersten und die zweiten Ausspitzungen an der Stirnseite des Schaftfräsers in Umfangsrichtung wechselseitig abwechseln.

5. Schaftfräser nach einem der voranstehenden Ansprüche,
**dadurch gekennzeichnet, dass**
die stirnseitige Nebenschneide einer ersten Schneide eines ersten Zahns länger als die stirnseitige Nebenschneide einer zweiten Schneide eines zweiten Zahns ist, wobei die erste Ausspitzung den Spanraum der ersten Schneide bzw. des ersten Zahns mitausbildet und die zweite Ausspitzung den Spanraum der zweiten Schneide bzw. des zweiten Zahns mitausbildet.

6. Schaftfräser nach dem voranstehenden Anspruch,
**gekennzeichnet, durch**
mehrere von den ersten Zähnen bzw. ersten Schneiden mit den längeren stirnseitigen Nebenschneiden und den Spanräumen mit den ersten Ausspitzungen sowie mehrere von den zweiten Zähnen bzw. zweiten Schneiden mit den kürzeren stirnseitigen Nebenschneiden und den Spanräumen mit den zweiten Ausspitzungen, wobei sich die längeren stirnseitigen Nebenschneiden mit ihren jeweiligen ersten Ausspitzungen und die kürzeren stirnseitigen Nebenschneiden mit ihren jeweiligen zweiten Ausspitzungen an der Stirnseite des Schaftfräsers in Umfangsrichtung des Schneidabschnitts wechselseitig abwechseln.

7. Schaftfräser nach einem der voranstehenden Ansprüche,
**dadurch gekennzeichnet, dass**
die erste und die zweite Ausspitzung - stirnseitig beginnend - im Wesentlichen auf derselben axialen Höhe im Schneidbereich enden.

8. Schaftfräser nach einem der voranstehenden Ansprüche,
**dadurch gekennzeichnet, dass**
der Schneidbereich insgesamt vier Schneiden umfasst, von denen eine erste Schneide und eine dritte Schneide sowie eine zweite Schneide und eine vierte Schneide einander - im Wesentlichen - gegenüberliegen bzw. in etwa diametral gegenüberliegen und die erste Ausspitzung zwischen der ersten Schneide und der zweiten Schneide sowie zwischen der dritten Schneide und der vierten Schneide und die zweite Ausspitzung zwischen der zweiten Schneide und der dritten Schneide sowie zwischen der vierten Schneide und der ersten Schneide vorgesehen sind.

9. Schaftfräser nach einem der voranstehenden Ansprüche,
**dadurch gekennzeichnet, dass**
dass die Schneiden in Umfangsrichtung des Schneidbereichs ungleichmäßig verteilt sind.

10. Schaftfräser nach einem der voranstehenden Ansprüche,
**dadurch gekennzeichnet, dass**
in Umfangsrichtung des Schneidbereichs und an einer vorgebbaren axialen Höhe in dem Schneidbereich der Winkel zwischen der ersten Schneide und der zweiten Schneide und zwischen der dritten Schneide und der vierten Schneide jeweils größer als 90°, insbesondere ca. 97,5 °, ist und/oder der Winkel zwischen der zweiten Schneide und der dritten Schneide und zwischen der vierten Schneide und der ersten Schneide jeweils kleiner als 90°, insbesondere ca. 82,5°, ist, insbesondere, dass die vorgebbare axiale Höhe die Stirnfläche des Schaftfräsers (entspricht Höhe 0 mm) oder ca. 0,5 * D (D = Durchmesser des Schneidbereichs) axial unterhalb der Stirnfläche des Schaftfräsers ist.

11. Schaftfräser nach einem der voranstehenden Ansprüche,
**dadurch gekennzeichnet, dass**
die umfangsseitigen Hauptschneiden der Schneiden unterschiedliche Drallwinkel aufweisen, insbesondere, dass die umfangsseitigen Hauptschneiden der Schneiden in Umfangsrichtung des Schneidbereichs wechselnd einen ersten und einen zu dem ersten Drallwinkel unterschiedlichen zweiten Drallwinkel aufweisen.

12. Schaftfräser nach einem der voranstehenden Ansprüche,
**dadurch gekennzeichnet, dass**
die Stirnfläche einer, insbesondere jeder, Schneide an der Nebenschneide einen Freiwinkel zwischen 5° und 7°, insbesondere ca. 6°, zu einer zu der Rotationsachse des Schaftfräsers senkrechten Ebene aufweist.

13. Schaftfräser nach einem der voranstehenden Ansprüche,
**dadurch gekennzeichnet, dass**
die spanraumseitige (Stirn-)Fläche einer, insbesondere jeder, Nebenschneide einen Spanwinkel zwischen 2° und 4°, insbesondere ca. 3°, zu einer zu der Rotationsachse des Schaftfräsers parallelen Ebene aufweist.

14. Schaftfräser nach einem der voranstehenden Ansprüche,
**dadurch gekennzeichnet, dass**
die stirnseitige Nebenschneide und die umfangsseitige Hauptschneide einer Schneide über eine Eckfase ineinander übergehen, mit insbesondere einen Eckfasenwinkel von ca. 45°.

15. Schaftfräser nach einem der voranstehenden Ansprüche,
**dadurch gekennzeichnet, dass**
der Kern zylindrisch ausgebildet ist.

16. Schaftfräser nach einem der voranstehenden Ansprüche,
**dadurch gekennzeichnet, dass**
zumindest der Schneidbereich beschichtet ist, mit insbesondere einer Beschichtung mit einer Schichtdicke zwischen 0,0010 mm und 0,006 mm, im Besonderen zwischen 0,0015 mm und 0,005 mm, im Speziellen zwischen 0,0018 mm und 0,004 mm.

17. Schaftfräser nach einem der voranstehenden Ansprüche,
**dadurch gekennzeichnet, dass**
der Schaftfräser aus Vollhartmetall ist.
